# EUROPEAN PATENT APPLICATION

(11) **EP 2 843 981 A1**
(43) Date of publication of application: **04.03.2015**
(21) Application number: 12875184.9
(22) Date of filing: 19.12.2012
(51) Int. Cl.: H04W 16/14

(54) **CONTROL DEVICE, BASE STATION, MOBILE STATION, CORE NETWORK NODE, METHOD IMPLEMENTED THEREON, AND COMPUTER-READABLE MEDIUM**

(30) Priority: 27.04.2012 JP 2012102333
(71) Applicant: NEC Corporation, Tokyo 108-8001 (JP)
(72) Inventor: AMINAKA, Hiroaki, Tokyo 1088001 (JP)
(74) Representative: MacDougall, Alan John Shaw
(86) International application number: PCT/JP2012/008135
(87) International publication number: WO 2013/160980

(57) **Abstract**

In one embodiment, a control unit (3) operates to control, based on at least one condition, utilization of a shared frequency by a base station (1) included in a radio communication system (100). The shared frequency is shared by a plurality of radio systems including the radio communication system (100) and is additionally used by the base station (1) that also uses a licensed frequency licensed to the radio communication system (100). The at least one condition includes that a mobile station (2) communicating with the base station (1) is characterized by a specific attribute. This contributes, for example, to efficient utilization by a base station of a shared frequency (e.g., TVWS) shared by a plurality of radio systems.

## Description

### Technical Field

The present invention relates to control of utilization of a shared frequency by a radio communication system.

### Background Art

Cognitive radio recognizes a surrounding wireless environment and optimizes a communication parameter according to the wireless environment. One example of cognitive radio is a case where a plurality of radio systems share a frequency band. For example, there is a case in which a frequency band that can be preferentially used by a certain radio system (which is referred to as a primary system) is secondarily used by another radio system (which is referred to as a secondary system). Institute of Electrical and Electronic Engineers (IEEE) 802.22 has been discussing standardization of a Wireless Regional Area Network (WRAN) corresponding to a secondary system that secondarily uses a frequency band (a TV channel) licensed to a TV broadcasting system corresponding to a primary system.

When a secondary system secondarily uses a frequency band licensed to a primary system, it is necessary for the secondary system to exert no influence on services provided by the primary system. Accordingly, in order to avoid causing interference to the primary system, the secondary system uses a frequency band that is not temporally or spatially used by the primary system or adjusts transmission power so that interference experienced by the primary system is below a tolerance level (see, e.g., Patent Literature 1).

There has been an active study assuming a case in which, in one example of cognitive radio, a primary system is a TV broadcasting system and a secondary system is a cellular system. A frequency band that is not temporally or spatially used by the TV broadcasting system is referred to as a TV White Space (WS) (see, e.g., Non-Patent Literature 1).

As a cognitive radio technology for identifying an unused frequency band, a Geo-location Database (GDB), spectrum sensing, and a beacon (or Cognitive Pilot Channel (CPC)) are known. Two or more of them, for example, a GDB and spectrum sensing or a GDB and a beacon may be used in combination with each other. A GDB provides a status of utilization of a shared frequency band (e.g., a TV band) or information of a secondarily usable (i.e., unused) frequency band (e.g., TVWS), according to a geological location.

Fig. 1 is a sequence diagram disclosed in Non-Patent Literature 1 and shows an allocation procedure of TVWS to a cellular system. Note that Fig. 1 shows an example of using carrier aggregation (CA) that is standardized as a part of Long Term Evolution (LTE) Release 10 by Third Generation Partnership Project (3GPP). That is, the cellular system uses a TV band spectrum as one of a plurality of component carriers (CC). Typically, a frequency band that is licensed to the cellular system (i.e., a licensed band) is used as a primary carrier (or a primary cell), while the TV band spectrum is used as a secondary carrier (or a secondary cell).

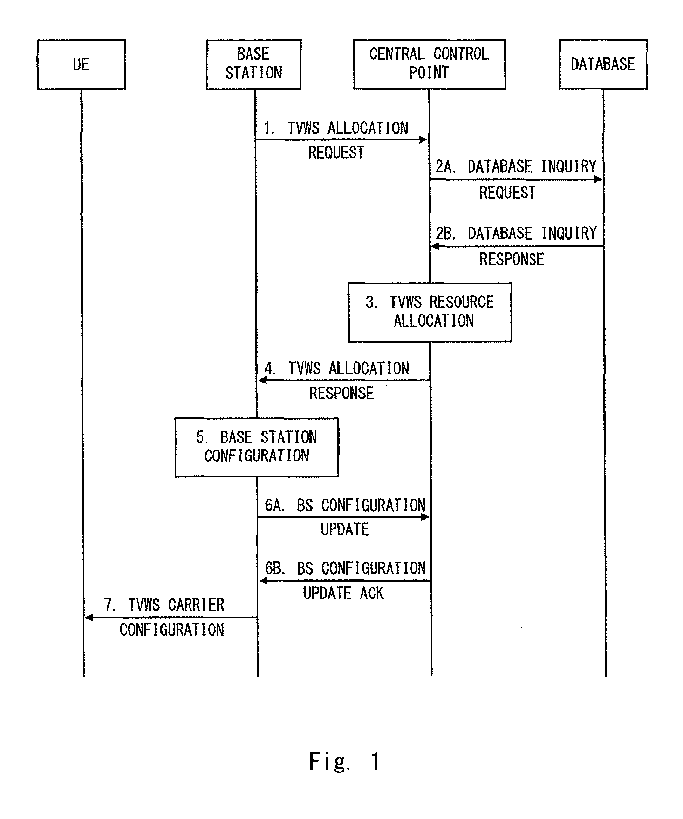

Steps 1 to 7 in Fig. 1 are explained below.

Step 1: A base station sends a TVWS Allocation Request to a Central Control Point (CCP) to ask for allocation of TVWS resources. The TVWS Allocation Request includes location information of the base station and may include sensing results in the TVWS. The CCP accesses to a GDB and retrieves utilization status of a TV band or information of available TVWS from the GDB. The CCP can be referred to as a spectrum management entity, an operation and management apparatus, an Operation Administration and Maintenance (OAM) system, a Spectrum Manager (SM), a spectrum management apparatus, or a spectrum management system.

Step 2: The CCP inquires the GDB whether there is a TVWS frequency band available at the location of the base station

Step 3: The CCP determines TVWS frequency allocation to the base station based on the information retrieved from the GDB and its knowledge of status of surrounding radio usage. The CCP, for example, performs interference management between neighbor cells within the same cellular system.

Step 4: If an available TVWS frequency exists at the location of the base station, the CCP sends TVWS Allocation Response to the base station. The TVWS Allocation Response includes the information of TVWS allocated to the base station. Other configuration information (e.g., information of a plurality of candidate frequency bands and transmission power restricted by regulation) may be sent to the base station as well. Otherwise, the CCP notifies the base station that no TVWS frequency is available at the location of the base station.

Step 5: The base station determines, based on the notification of the TVWS from the CCP, a TV band spectrum to be used as a component carrier to perform carrier aggregation. Then, the base station configures itself to perform CA.

Step 6: The base station sends BS Configuration Update message including the updated configuration information to the CCP. The CCP responds with BS Configuration Update Ack message to the base station.

Step 7: The base station notifies a mobile station (i.e., User Equipment (UE)) of a carrier aggregation status, for example, through the system information transmitted on the licensed band. For a connected mode UE, the base station may redirect the UE to the added TV band to offload traffic from the licensed band.

Although not shown in the drawings, Non-Patent Literature 1 discloses a procedure to stop the base station from using TVWS in response to a request from the GDB.

### Citation List

### Patent Literature

[Patent Literature 1] Japanese Unexamined Patent Application Publication No. 2011-166721

### Non Patent Literature

[Non-Patent Literature 1] ETSI TR 102 907 V1.1.1 (2011-10), "Reconfigurable Radio Systems (RRS); Use Cases for Operation in White Space Frequency Bands", October 2011

### Summary of Invention

### Technical Problem

As described above, Non-Patent Literature 1 discloses that TVWS allocation to the base station is initiated by the TVWS Allocation Request sent from the base station. However, Non-Patent Literature 1 does not disclose specific event, status or condition that triggers the sending of the TVWS Allocation Request by the base station.

For example, it may be possible to consider that the base station requests an additional shared frequency resource when the base station starts an operation (i.e., power on). However, in this case, the shared frequency allocated to the base station may not be sufficiently used, thereby possibly wasting the shared frequency.

Further, for example, it may be possible to consider that when a load of a cell that has already been operated by the base station (i.e., a usage status of the licensed band) exceeds a threshold level, the base station requests allocation of an additional shared frequency resource. However, for example, when the threshold level for the cell load is too high, the base station is subjected to a high load until the shared frequency resource is allocated to the base station. Meanwhile, when the threshold level for the cell load is too low, the shared frequency allocated to the base station is not sufficiently used, thereby possibly wasting the shared frequency.

As described above, a condition regarding the cell load may not be sufficient as a condition for allocating an additional shared frequency resource to the base station. In order to address this problem, the present inventor has developed another method that can be used in place of or in combination with the method for allocating the shared frequency resource to the base station based on the condition regarding the cell load. Accordingly, one of the objects of the present invention is to provide a control apparatus, a base station, mobile station, a core network node, methods implemented thereon and programs that contribute to efficient utilization by a base station of a shared frequency shared by a plurality of radio systems.

### Solution to Problem

In a first aspect, a control apparatus includes a control unit. The control unit operates to control, based on at least one condition, utilization of a shared frequency by a base station included in a radio communication system. The shared frequency is shared by a plurality of radio systems including the radio communication system and is additionally used by the base station that also uses a licensed frequency licensed to the radio communication system. Further, the at least one condition includes that a mobile station communicating with the base station is characterized by a specific attribute.

In a second embodiment, there is provided a base station used in a radio communication system. The base station includes a control unit that operates to control, based on at least one condition, utilization by the base station of a shared frequency. The shared frequency is shared by a plurality of radio systems including the radio communication system and is additionally used by the base station that also uses a licensed frequency licensed to the radio communication system. Further, the at least one condition includes that a mobile station communicating with the base station is characterized by a specific attribute.

In a third embodiment, there is provided a mobile station that is used in a radio communication system and communicates with a base station. The mobile station includes a control unit that operates to send attribute information of the mobile station to the base station or a core network node. The attribute information is used to control, based on at least one condition, utilization by the base station of a shared frequency. The shared frequency is shared by a plurality of radio systems including the radio communication system and is additionally used by the base station that also uses a licensed frequency licensed to the radio communication system. The at least one condition includes that the mobile station is characterized by a specific attribute.

In a fourth embodiment, there is provided a core network node arranged in a core network of a radio communication. The core network node includes a control unit that operates to send, to a base station included in the radio communication system, a first notification indicating that a mobile station belonging to the base station is characterized by a specific attribute. The first notification triggers the base station to use a shared frequency. Further, the shared frequency is shared by a plurality of radio systems including the radio communication system and is additionally used by the base station that also uses a licensed frequency licensed to the radio communication system.

In a fifth embodiment, there is provided a method for controlling utilization of a shared frequency. The method includes controlling, based on at least one condition, utilization by a base station included in a radio communication system of a shared frequency. The shared frequency is shared by a plurality of radio systems including the radio communication system and is additionally used by the base station that also uses a licensed frequency licensed to the radio communication system. Further, the at least one condition includes that a mobile station communicating with the base station is characterized by a specific attribute.

In a sixth embodiment, there is provided a method implemented in a mobile station that is used in a radio communication system and communicates with a base station. The method includes sending attribute information of the mobile station to the base station or a core network node. The attribute information is used to control, based on at least one condition, utilization by the base station of a shared frequency. The shared frequency is shared by a plurality of radio systems including the radio communication system and is additionally used by the base station that also uses a licensed frequency licensed to the radio communication system. Further, the at least one condition includes that the mobile station is characterized by a specific attribute.

In a seventh embodiment, there is provided a method implemented in a core network node arranged in a core network of a radio communication system. The method includes sending a first notification to a base station included in the radio communication system, under a condition that a mobile station belonging to the base station is characterized by a specific attribute. The first notification triggers the base station to use a shared frequency. Further, the shared frequency is shared by a plurality of radio systems including the radio communication system and is additionally used by the base station that also uses a licensed frequency licensed to the radio communication system.

In an eighth embodiment, there is provided a program for causing a computer to perform the method according to the above-mentioned fifth aspect.

In a ninth embodiment, there is provided a program for causing a computer to perform the method according to the above-mentioned sixth aspect.

In a tenth embodiment, there is provided a program for causing a computer to perform the method according to the above-mentioned seventh aspect.

### Advantageous Effects of Invention

According to the above-mentioned aspects, it is possible to provide a control apparatus, a base station, mobile station, a core network node, methods implemented thereon and programs that contribute to efficient utilization by a base station of a shared frequency.

### Brief Description of Drawings

Fig. 1 is a sequence diagram according to a related art;
Fig. 2 is a diagram showing a configuration example of a radio communication system according to a first embodiment;
Fig. 3 is a flowchart showing a specific example of a procedure for controlling utilization of a shared frequency according to the first embodiment;
Fig. 4 is a diagram showing another configuration example of the radio communication system according to the first embodiment;
Fig. 5 is a diagram showing another configuration example of the radio communication system according to the first embodiment;
Fig. 6 is a diagram showing another configuration example of the radio communication system according to the first embodiment;
Fig. 7 is a sequence diagram showing a specific example of a procedure for controlling utilization of a shared frequency according to a second embodiment;
Fig. 8 is a flowchart showing an example of an operation performed by a management entity (e.g., OAM) for controlling utilization of the shared frequency according to the second embodiment;
Fig. 9 is a sequence diagram showing a specific example of a procedure for controlling utilization of a shared frequency according to a third embodiment;
Fig. 10 is a flowchart showing an example of an operation performed by a base station for controlling utilization of a shared frequency according to the third embodiment;
Fig. 11 is a sequence diagram showing a specific example of a procedure for controlling utilization of a shared frequency according to a fourth embodiment;
Fig. 12 is a flowchart showing an example of an operation performed by a core network node (e.g., a control node) for controlling utilization of a shared frequency according to the fourth embodiment;
Fig. 13 is a sequence diagram showing a specific example of a procedure for controlling utilization of a shared frequency according to a fifth embodiment;
Fig. 14 is a flowchart showing an example of an operation performed by a base station for controlling utilization of a shared frequency according to the fifth exemplary embodiment;
Fig. 15 is a sequence diagram showing a specific example of a procedure for controlling utilization of a shared frequency according to a sixth embodiment; and
Fig. 16 is a flowchart showing an example of an operation performed by a base station for controlling utilization of a shared frequency according to the sixth embodiment.

### Description of Embodiments

Hereinafter, specific embodiments will be described in detail with reference to the drawings. The same components are denoted by the same reference numerals throughout the drawings, and a repeated explanation will be omitted as necessary for clarity of the explanation.

### First embodiment

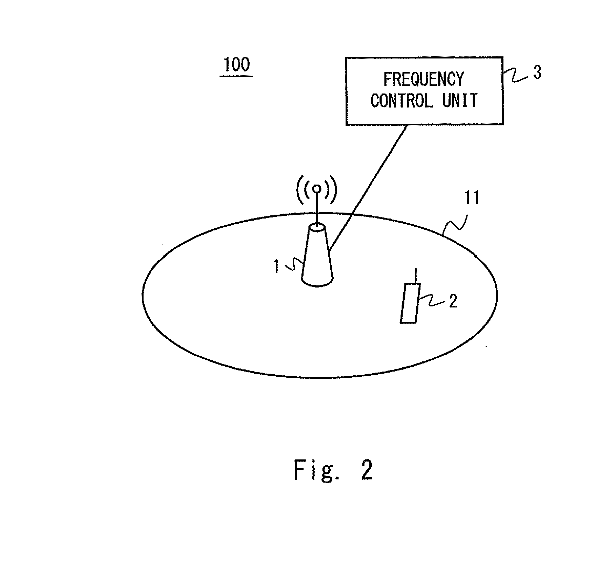

Fig. 2 shows a configuration example of a radio communication system 100 according to this embodiment. The radio communication system 100 may be a cellular system (e.g., LTE system, Universal Mobile Telecommunications System (UMTS), CDMA2000 system (EV-DO, 1xRTT, HPRD), or a Global System for Mobile Communications (GSM) system). Otherwise, the radio communication system 100 may be a non-cellular system (e.g., WiMAX system, or wireless Local Area Network (LAN) system).

The radio communication system 100 includes a base station 1, mobile station 2, and a frequency control unit 3. The base station 1 operates a cell 11 and communicates with the mobile station 2 belonging to the cell 11. The base station 1 is referred to as, for example, a base station, a Relay Node (RN), or an access point. The mobile station 2 is referred to as, for example, a mobile station, a User Equipment (UE), or a Wireless Transmit/Receive Unit (WTRU). The cell 11 means a coverage area of the base station 1. The cell 11 may be a sector cell.

The frequency control unit 3 operates to control, based on at least one condition, utilization by the base station 1 of a shared frequency. The shared frequency is shared by a plurality of radio systems including the radio communication system 100 and is additionally used by the base station 1 that also uses a licensed frequency licensed to the radio communication system 100. Further, the at least one condition includes a condition regarding an attribute of the mobile station 2 belonging to the base station 1 (or the cell 11), that is, the at least one condition includes that the mobile station 2 is characterized by a "specific attribute".

The shared frequency may be a frequency band licensed to a primary system (e.g., TVWS). In this case, the radio communication system 100 as a secondary system can secondarily use the shared frequency, for example, when the shared frequency is not temporally or spatially used by the primary system. In other words, the radio communication system 100 can use not only a licensed frequency licensed to the radio communication system 100 but also secondarily use a shared frequency (e.g., TVWS) that is not licensed to the radio communication system 100. Note that the primary system may not exist. In this case, the shared frequency may be equally shared by a plurality of radio communication systems, e.g., by a plurality of communication systems operated by different operators. The plurality of radio communication systems may include only systems using the same wireless access technology (e.g., LTE) or may include systems using wireless access technologies different from each other (e.g., LTE, CDMA2000, GSM, WiMAX).

The frequency control unit 3 may directly or indirectly control the utilization by the base station 1 of the shared frequency. The direct control on the utilization of the shared frequency may include at least one of:
(a) allowing the base station 1 to use the shared frequency;
(b) allocating the shared frequency resource to the base station 1;
(c) stopping the base station 1 from using the shared frequency; and
(d) releasing the allocation of the shared frequency resources to the base station 1.

In a specific example of the direct control on the utilization of the shared frequency, the frequency control unit 3 allocates the shared frequency resource to the base station 1 when at least one condition including the above-mentioned condition regarding the attribute of the mobile station 2 is satisfied. In this case, the frequency control unit 3 may be arranged in a spectrum management entity that manages the frequency utilization of the radio communication system 100. The spectrum management entity may be referred to as an operation and management apparatus, an operation and management system, an Operation Administration and Maintenance (OAM) system, a Spectrum Manager (SM), a spectrum management apparatus, or a spectrum management system. The spectrum management entity may be a Central Control Point (CCP) that is mentioned in Background.

Meanwhile, a specific example of the indirect control on the utilization of the shared frequency includes, for example, requesting a spectrum management entity to allocate the shared frequency resource to the base station 1. In this case, the frequency control unit 3 may be arranged in the base station 1.

Moreover, the indirect control on the utilization of the shared frequency may include sending a message from the core network to the base station 1. This message triggers the base station 1 to send an allocation request of the shared frequency resource. In this case, the frequency control unit 3 may be arranged in a core network node. The core network node may be, for example, a control node (e.g., a Mobility Management Entity (MME) in an LTE system or a Serving GPRS Support Node (SGSN) in UMTS) that performs mobility management and bearer (session) management of the mobile station 2.

In this embodiment, the specific attribute regarding the mobile station 2 is used to determine, for example, additional allocation or release of the shared frequency resource to the base station 1. Accordingly, the specific attribute is preferably an attribute indicating that the mobile station 2 should be given special treatment in the frequency resource allocation. Alternatively, the specific attribute may indicate a request for special consideration in a throughput, cell capacity, Quality of Service (QOS) or cell coverage of the cell 11.

The specific attribute may indicate, for example, that the mobile station 2 is an important user (i.e., a VIP user). In this case, the frequency control unit 3 may evaluate whether a priority of the mobile station 2 is higher than a predetermined level. Alternatively, the specific attribute may indicate that the mobile station 2 is a user with traffic volume greater than that of other mobile station (i.e., a heavy user). In this case, the frequency control unit 3 may evaluate whether the traffic volume of the mobile station 2 is greater than a predetermined level.

A specific mobile station, such as a VIP user or a heavy user, has possibilities that it requests special consideration in a throughput, cell capacity, QoS, or cell coverage of the cell 11. This is because that the base station 1 may need to preferentially provide services to the VIP user and may need to guarantee the throughput in communications of the VIP user. Additionally or alternatively, the base station 1 may need to ensure a sufficient cell capacity in preparation for communications of the heavy user.

In order to address this problem, as has already been mentioned, this embodiment controls the utilization by the base station 1 of the shared frequency based on the condition that a mobile station characterized by the specific attribute (hereinafter referred to as a specific mobile station) belongs to the cell 11. Accordingly, this embodiment can contribute to efficient utilization by the base station 1 of the shared frequency shared by a plurality of radio systems.

The frequency control unit 3 may receive attribute information sent from the mobile station 2 in order to evaluate the attribute of the mobile station 2. Moreover, the frequency control unit 3 may retrieve attribute information of the mobile station 2 that is held in a subscriber information server (e.g., a Home Subscriber Server (HSS) or a Home Location Register (HLR)) arranged in the core network. The attribute information of the mobile station 2 includes information that allows an evaluation of whether the mobile station 2 is the specific mobile station. The attribute information of the mobile station 2 may indicate either or both of priority of the mobile station 2 and traffic volume of the mobile station 2. The traffic volume of the mobile station 2 may be a statistical value, such as average traffic volume. Further or alternatively, the attribute information of the mobile station 2 may indicate whether the mobile station 2 has the specific attribute. For example, the attribute information of the mobile station 2 may include an identifier indicating that the priority of the mobile station 2 is higher than the predetermined level (e.g., an identifier corresponding to the VIP user). Furthermore, the attribute information of the mobile station 2 may include an identifier indicating that the mobile station 2 is a user with traffic volume greater than that of other mobile station (i.e., the heavy user).

Hereinafter, a timing at which the frequency control unit 3 performs the evaluation is described. For example, when the base station 1 or the core network receives a connection change request from the mobile station 2, the frequency control unit 3 evaluates whether the mobile station 2 is characterized by the specific attribute (hereinafter referred to as a specific mobile station), that is, determines allocation of the shared frequency to the base station 1. The connection change request from the mobile station 2 may be a request for triggering some kind of change in a connection of the mobile station 2 with the base station 1 or the core network. The connection change request from the mobile station 2 may include at least one of:
(a) an attach request to the base station 1 or the core network;
(b) an additional bearer request;
(c) a bearer update request;
(d) a service request;
(e) a detach request; and
(f) a bearer release request.

Typically, the frequency control unit 3 may allow the base station 1 to use the additional shared frequency in response to reception of the attach request from the specific mobile station. In other words, the frequency control unit 3 may allocate the shared frequency to the base station 1 or send the allocation request of the shared frequency to the spectrum management entity in response to connecting the specific mobile station to the base station 1 (or the cell 11). In this way, the base station 1 can use the shared frequency in response to connecting the specific mobile station (e.g., the VIP user or the heavy user) to the cell 11.

Moreover, the frequency control unit 3 may stop the base station 1 from using the shared frequency under a condition that at least one mobile station 2 belonging to the base station 1 (or the cell 11) does not include the specific mobile station (e.g., the VIP user or the heavy user). In this way, the base station 1 can use the shared frequency only for a period when the specific mobile station (e.g., the VIP user or the heavy user) belongs to the cell 11.

Note that instead of the reception of the connection change request from the mobile station 2, upon reception of the connection change request regarding the mobile station 2 from the core network, the frequency control unit 3 may evaluate whether the mobile station 2 is the specific mobile station, that is, may determine allocation of the shared frequency to the base station 1.

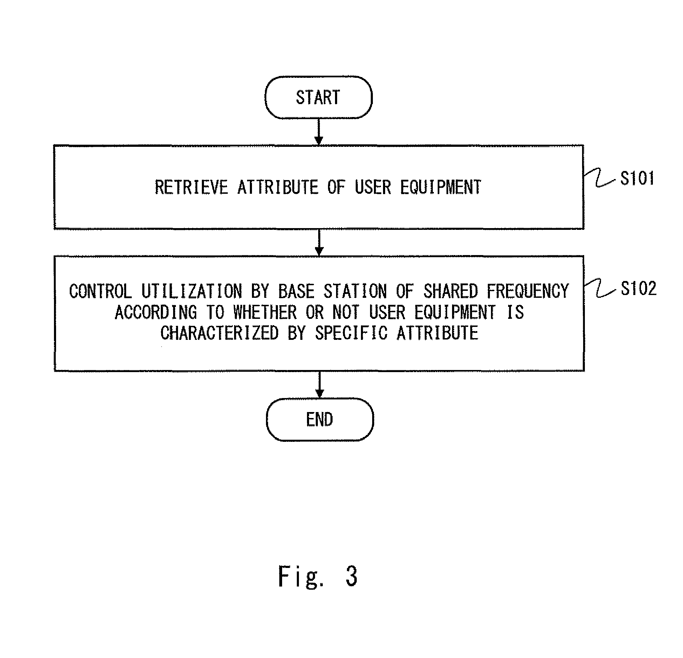

Fig. 3 is a flowchart showing a specific example of a procedure for controlling utilization of the shared frequency according to this embodiment. In Step S101, the frequency control unit 3 retrieves the attribute of the mobile station 2 that belongs to the base station 1 (or the cell 11). In Step S102, the frequency control unit 3 evaluates at least one condition using the attribute of the mobile station 2 that is retrieved in Step S101. As has already been mentioned, the at least one condition includes a condition regarding whether the mobile station 2 is the specific mobile station. Then, the frequency control unit 3 controls the utilization by the base station 1 of the additional shared frequency according to whether or not the at least one condition is satisfied.

In Step S102, the frequency control unit 3 may allow the base station 1 to use the shared frequency under a condition that, for example, at least one mobile station 2 belonging to the base station 1 (or the cell 11) includes the specific mobile station. In this case, in order to allow the base station 1 to use the shared frequency, the frequency control unit 3 may directly or indirectly control the utilization of the shared frequency by the base station 1. For example, when the frequency control unit 3 is arranged in the spectrum management entity, the frequency control unit 3 may notify the base station 1 of the shared frequency or a part of the shared frequency as an allocation frequency (or a candidate frequency). When the frequency control unit 3 is arranged in the base station 1, the frequency control unit 3 may send to the spectrum management entity the allocation request of shared frequency resource.

In order to control the utilization by the base station 1 of the shared frequency, the frequency control unit 3 may consider other conditions in addition to the condition regarding the attribute of the mobile station 2. For example, the frequency control unit 3 may consider a geological location of the base station 1. Specifically, the frequency control unit 3 may evaluate whether the geological location of the base station 1 is within an area in which the utilization of the shared frequency is allowed. Further or alternatively, the frequency control unit 3 may consider frequencies that are able to be utilized by the base station 1. Specifically, the frequency control unit 3 may evaluate whether the shared frequency is within a frequency spectrum range that is able to be utilized by the base station 1. Further or alternatively, the frequency control unit 3 may consider the maximum or minimum value of downlink transmission power of the base station 1.

The frequency control unit 3 may use the condition regarding the attribute of the mobile station 2 in combination with another condition in order to evaluate whether to allow the base station 1 to use the shared frequency. Another condition is, for example, a condition regarding the number of the mobile station 2 that belongs to the base station 1 (or the cell 11), a condition of traffic volume, or a condition of usage amount of the frequency resource. Specifically, the frequency control unit 3 may determine the utilization by the base station 1 of the shared frequency under a condition that the number of the specific mobile stations belonging to the cell 11 (e.g., the VIP user or the heavy user) exceeds a predetermined threshold. Further or alternatively, the frequency control unit 3 may determine the utilization by the base station 1 of the shared frequency under a condition that total traffic volume of the specific mobile stations belonging to the cell 11 (or the utilization amount of the frequency resource) exceeds a threshold.

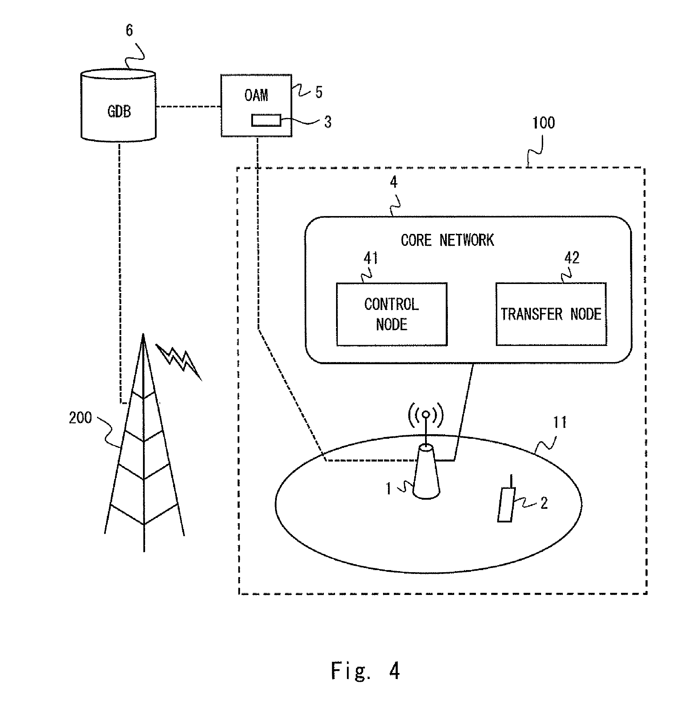

Hereinafter, a specific example of an arrangement of the frequency control unit 3 is described. Figs. 4 to 6 are network configuration diagrams showing arrangement examples of the frequency control unit 3. The arrangement of the frequency control unit 3 is determined as appropriate based on a design concept of network architecture or based on the wireless communication standard. Note that in the network configuration examples of Figs. 4 to 6, the radio communication system 100 includes a core network 4. The core network 4 includes at least one control node 41 and at least one transfer node 42. The at least one control node 41 includes one or more node in a control plane and perform mobility management and bearer (session) management. The at least one transfer node 42 includes one or more nodes in a data plane and transfer user data packets between an external network (not shown in the drawings) and a radio access network (including the base station 1). A specific example of the at least one control node 41 includes an MME and a control plane function of an SGSN. Further, a specific example of the at least one transfer node 42 includes a Serving Gateway (S-GW), a Packet Data network Gateway (P-GW), a Gateway GPRS Support Node (GGSN), and a user plane function of an SGSN.

Moreover, the network configuration examples of Figs. 4 to 6 include an operation and management apparatus (OAM) 5 and a Geo-location Database (GDB) 6. The OAM 5 is an example of the spectrum management entity that has already been mentioned. The OAM 5 manages a plurality of base stations including the base station 1. The OAM 5 may manage a plurality of radio communication systems including the radio communication system 100. One example is that the plurality of radio communication systems are operated by one operator. Another example is that the plurality of radio communication systems includes systems operated by different operators. The OAM 5 communicates with the GDB 6 and receives shared frequency information from the GDB 6. The shared frequency information indicates an available shared frequency (i.e., at least one candidate frequency). Note that the OAM 5 may receive the shared frequency information via another system (e.g., Spectrum Manager).

Furthermore, the network configuration examples in Figs. 4 to 6 include a TV broadcasting system 200. The TV broadcasting system 200 is a specific example of another radio system that uses the shared frequency. In the examples in Figs. 4 to 6, the GDB 6 manages utilization status of a frequency band that is licensed to the TV broadcasting system 200 (i.e., a TV band) and provides information of a frequency band that is available for secondary use (i.e., TVWS).

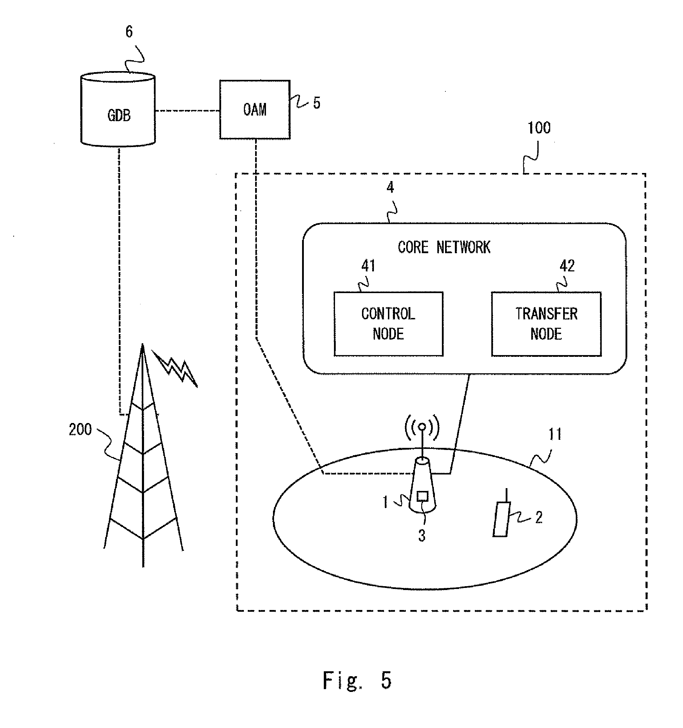

For example, as shown in Fig. 4, the frequency control unit 3 may be arranged in the operation and management apparatus (OAM) 5, which is the spectrum management entity. Alternatively, as shown in Fig. 5, the frequency control unit 3 may be arranged in the base station 1. Further alternatively, the frequency control unit 3 may be arranged in a core network node (e.g., the control node 41) that is included in the core network 4. Details of the arrangement examples of the frequency control units 3 shown in Figs. 4 to 6 will be described in the second to sixth embodiments below.

### Second embodiment

In this embodiment, a specific example will be described of the arrangement of the frequency control unit and the control procedure for utilizing the shared frequency described in the first embodiment. Specifically, this embodiment shows an example in which the frequency control unit 3 is arranged in the operation and management apparatus (OAM) 5. The configuration example of the network including the radio communication system 100 according to this embodiment is similar to that shown in Fig. 4.

However, the mobile station 2 of this embodiment includes a transmission control unit 20. The transmission control unit 20 controls the mobile station 2 to send the attribute information of the mobile station 2 to the base station 1 or the core network node (e.g., the control node 41). The attribute information of the mobile station 2 is used to control, based on at least one condition, the utilization by the base station 1 of the shared frequency.

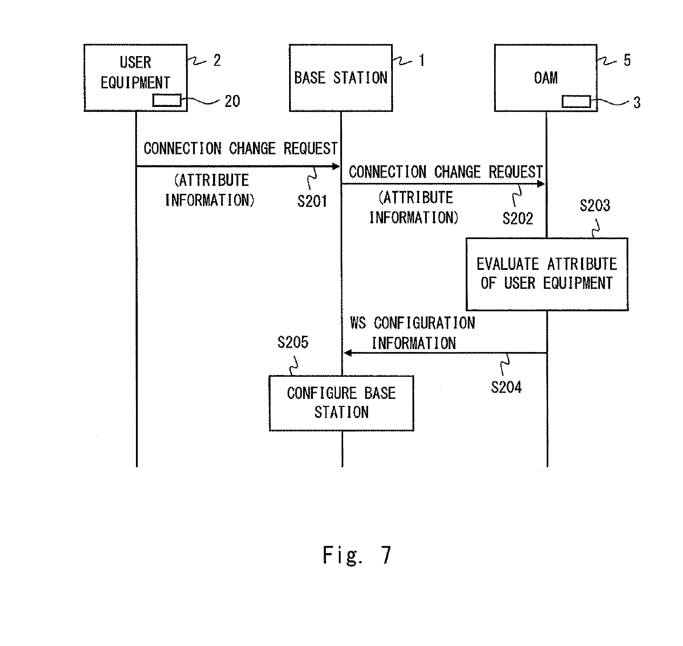

Fig. 7 is a sequence diagram showing an example of a control procedure for starting utilization by the base station 1 of the shared frequency (i.e., a procedure for allocating the shared frequency resource to the base station 1). In Step S201, the mobile station 2 sends the connection change request. The connection change request includes the attribute information of the mobile station 2. The connection change request is, for example, an attach request, an additional bearer request, a bearer update request, or a service request. In Step S202, the base station 1 transfers the connection change request to the OAM 5. Note that the base station 1 may transfer only a part, including at least the attribute information, of the connection change request received from the mobile station 2.

In Step S203, the OAM 5 evaluates the attribute of the mobile station 2 regarding the connection change request (or the attribute information) based on the connection change request (or the attribute information) received from the base station 1. When the mobile station 2 is the specific mobile station (e.g., the VIP user or the heavy user), the OAM 5 generates White Space (WS) configuration information and sends the WS configuration information to the base station 1 (Step S204). In Step S205, the base station 1 configures itself in accordance with the WS configuration information in order to use the shared frequency.

The WS configuration information sent in Step S204 indicates WS that is allowed for use by the base station 1, i.e., the shared frequency resource. The WS configuration information may indicate a plurality of candidate frequencies that are allowed for use by the base station 1. In this case, the base station 1 may select and use a frequency from the plurality of candidate frequencies.

The WS configuration information may include configuration information of transmission power regarding the shared frequency. The configuration information of the transmission power indicates, for example, the maximum transmission power that can be allowed (maximum permitted transmission power). The OAM 5 may determine the transmission power of the base station 1 so that interference to another radio system from a plurality of base stations within the radio communication 100 including the base station 1 will be a predetermined level or less. The other radio system is a system that uses the shared frequency, for example, a primary system (e.g., a TV broadcasting system using the TV band). In this manner, this embodiment can suppress the interference from the radio communication system 100 to the other radio system.

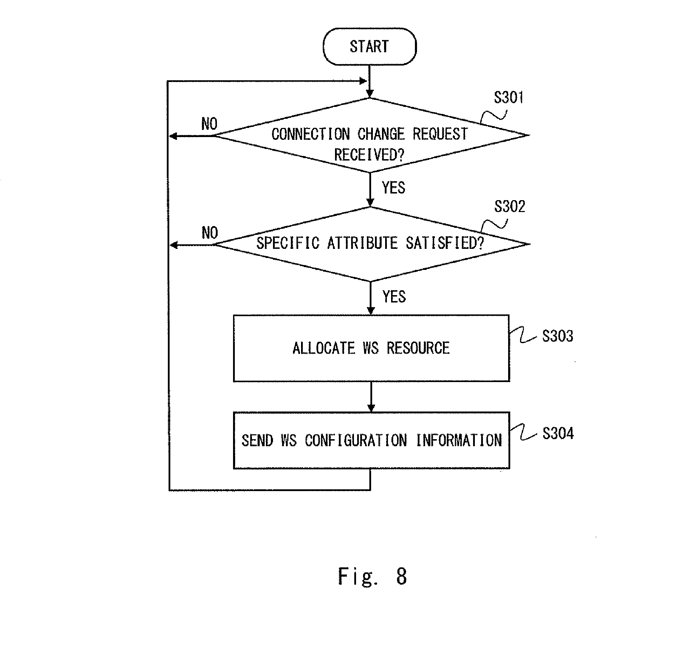

Fig. 8 is a flowchart showing an example of control for utilizing the shared frequency performed by the frequency control unit 3 that is arranged in the OAM 5. Steps S301 and S302 in Fig. 8 correspond to Steps S202 and S203 in Fig. 7. That is, in Step S301, the OAM 5 evaluates whether the connection change request (or the attribute information of the mobile station 2) has been received. In response to reception of the connection change request (YES in Step S301), the OAM 5 evaluates whether the mobile station 2 is the specific mobile station (Step S302).

Steps S303 and S304 in Fig. 8 correspond to Step S204 in Fig. 7. That is, when the mobile station 2 is the specific mobile station (YES in Step S302), the OAM 5 determines a shared frequency resource (a WS resource) to be allocated to the base station 1 (Step S303). Then, the OAM 5 sends to the base station 1 the WS configuration information indicating the determined shared frequency resource (Step S304).

As described above, in this embodiment, the frequency control unit 3 is arranged in the OAM 5. Thus, the OAM 5 can control the utilization of the shared frequency by the base station 1 according to whether or not the mobile station 2 is the specific mobile station. For example, the OAM 5 can allocate the shared frequency to the base station 1 under a condition that the mobile station 2 is the specific mobile station. That is, in this embodiment, characterization of the mobile station 2 by the specific attribute triggers the OAM 5 to allocate the shared frequency to the base station 1.

### Third embodiment

In this embodiment, a specific example will be described of the arrangement of the frequency control unit 3 and the control procedure for utilizing the shared frequency described in the first embodiment. Specifically, this embodiment shows an example in which the frequency control unit 3 is arranged in the base station 1. The configuration example of the network including the radio communication system 100 according to this embodiment is similar to that shown in Fig. 5.

However, the mobile station 2 of this embodiment includes a transmission control unit 20. The transmission control unit 20 controls the mobile station 2 to send the attribute information of the mobile station 2 to the base station 1 or the core network node (e.g., the control node 41). The attribute information of the mobile station 2 is used to control, based on at least one condition, the utilization by the base station 1 of the shared frequency.

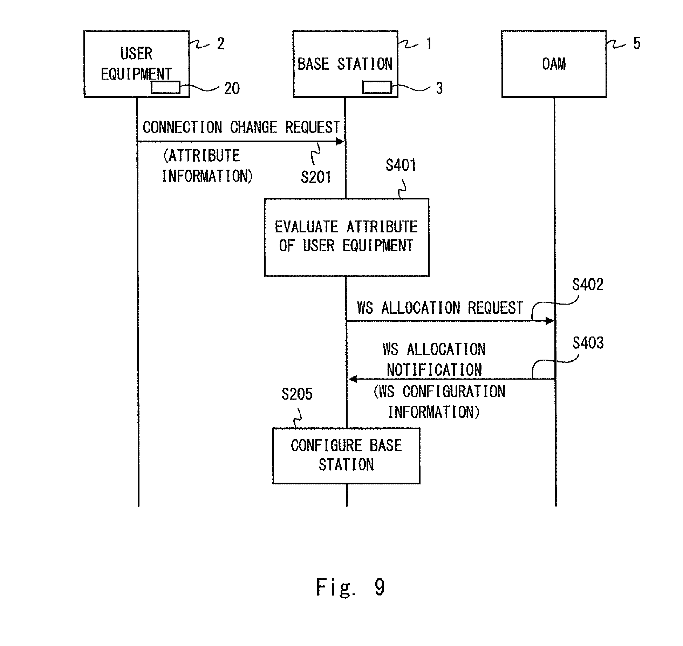

Fig. 9 is a sequence diagram showing an example of a control procedure for starting utilization by the base station 1 of the shared frequency (i.e., a procedure for allocating the shared frequency resources to the base station 1). Processing in Steps S201 and S205 in Fig. 9 may be similar to the processing in the steps denoted by the same reference numerals as those in Fig. 7. As is obvious from the comparison between Figs. 9 and 7, Fig. 9 includes Steps S401 to S403 in place of Steps S202 to S204 shown in Fig. 7.

In Step S401, the base station 1 evaluates the attribute of the mobile station 2 based on the attribute information included in the connection change request received from the mobile station 2. When the mobile station 2 is the specific mobile station (e.g., the VIP user or the heavy user), the base station 1 sends a White Space (WS) allocation request to the OAM 5 (Step S402). In Step S403, in response to the WS allocation request, the OAM 5 generates a WS allocation notification and sends the WS allocation notification to the base station 1. The WS allocation notification includes WS configuration information.

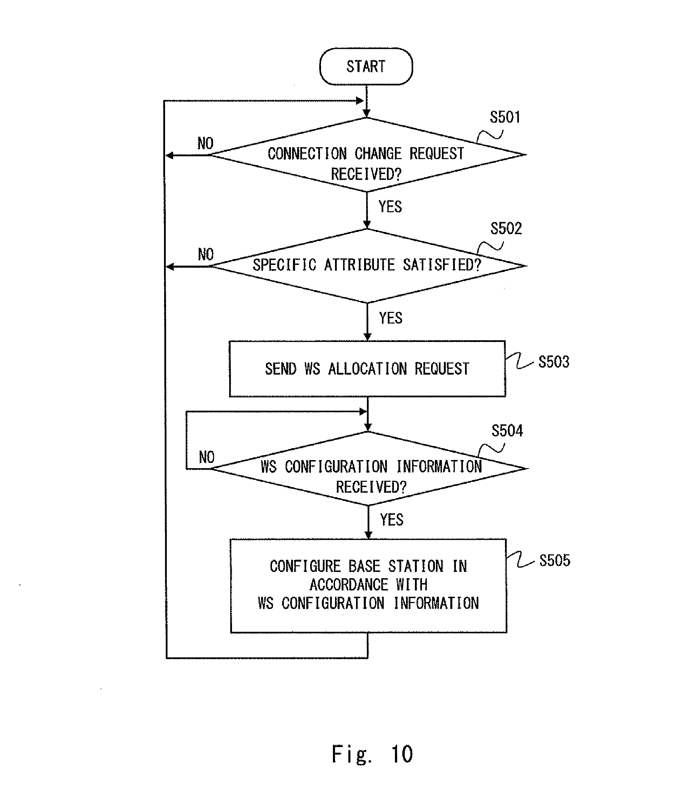

Fig. 10 is a flowchart showing an example of control for utilizing the shared frequency performed by the frequency control unit 3 that is arranged in the base station 1. Steps S501 and S502 in Fig. 10 correspond to Steps S201 and S401 in Fig. 9. That is, in Step S501, the base station 1 evaluates whether the connection change request has been received. In response to reception of the connection change request (YES in Step S501), the base station 1 evaluates whether the mobile station 2 is the specific mobile station (Step S502).

Steps S503 and S504 in Fig. 10 correspond to Steps S402 and S403 in Fig. 9. That is, when the mobile station 2 is the specific mobile station (YES in Step S502), the base station 1 sends the WS allocation request to the OAM 5 (Step S503). Next, in Step S504, the base station 1 evaluates whether the WS allocation notification has been received.

Step S505 in Fig. 10 corresponds to Step S205 in Fig. 9. That is, in response to reception of the WS allocation notification (YES in Step S504), the base station 1 configures the base station 1 in accordance with the WS configuration information included in the WS allocation notification (Step S505).

As described above, in this embodiment, the frequency control unit 3 is arranged in the base station 1. The base station 1 can therefore control the utilization of the shared frequency by the base station 1 according to whether or not the mobile station 2 is the specific mobile station. For example, the base station 1 can request the spectrum management entity (e.g., the OAM 5) to allocate the shared frequency under a condition that the mobile station 2 is the specific mobile station. That is, in this embodiment, characterization of the mobile station 2 by the specific attribute triggers the base station 1 to send the allocation request of the shared frequency.

### Fourth embodiment

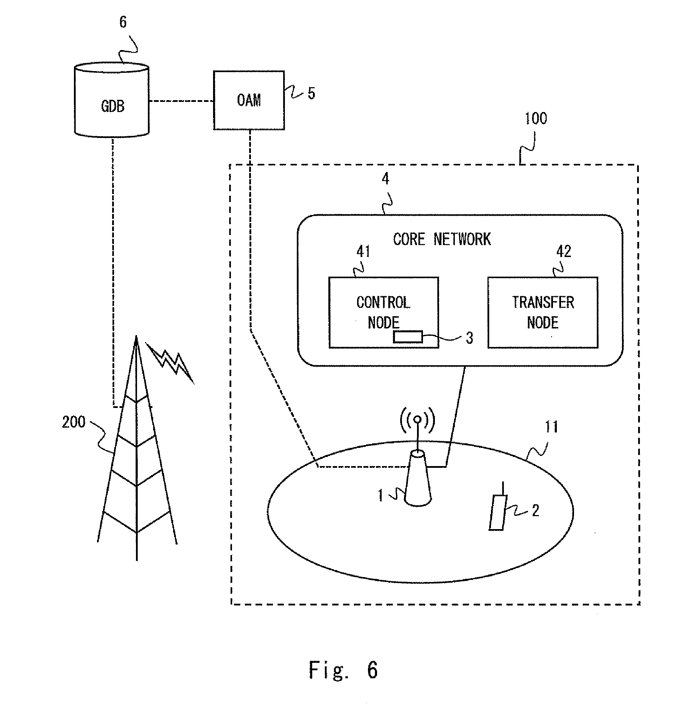

In this embodiment, a specific example will be described of the arrangement of the frequency control unit 3 and the utilization control procedure of the shared frequency described in the first embodiment. Specifically, this embodiment shows an example in which the frequency control unit 3 is arranged in the core network node (i.e., the control node 41). The configuration example of the network including the radio communication system 100 according to this embodiment is shown in Fig. 6.

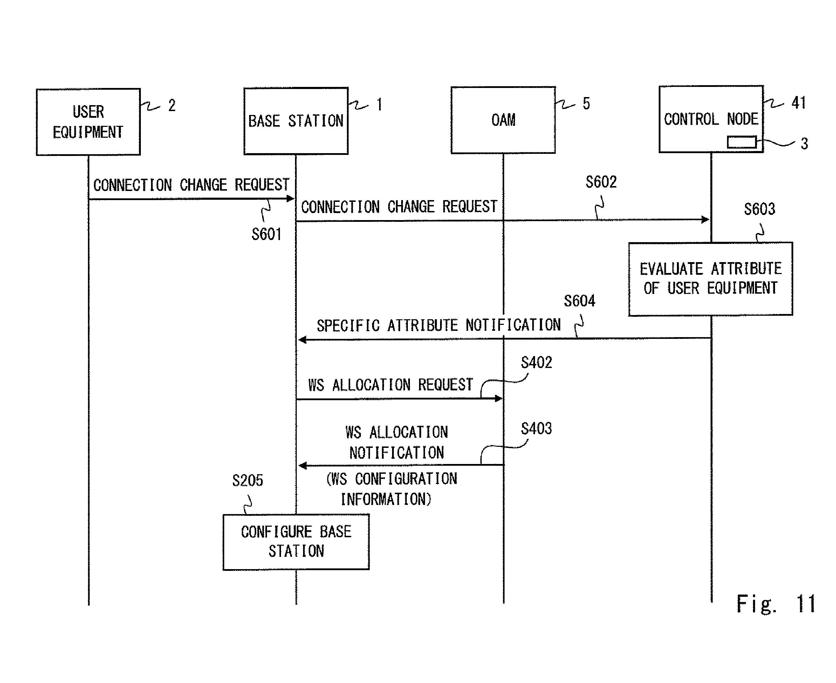

Fig. 11 is a sequence diagram showing an example of a control procedure for starting utilization by the base station 1 of the shared frequency (i.e., a procedure for allocating the shared frequency resource to the base station 1). Processing in Steps S402, S403, and S205 in Fig. 11 may be similar to the processing in the steps denoted by the same reference numerals as those in Fig. 9.

In Step S601 in Fig. 11, the mobile station 2 sends the connection change request. The connection change request may not include the attribute information (e.g., the priority and the traffic volume) that is used for the evaluation of whether or not the mobile station 2 is the specific mobile station. In Step S602, the base station 1 transfers the connection change request to the control node 41 arranged in the core network 4.

In Step S603, the control node 41 evaluates the attribute of the mobile station 2, which is a sender of the connection change request. That is, the control node 41 evaluates whether or not the mobile station 2 is the specific mobile station. At this time, the control node 41 may use the attribute information received from the mobile station 2. Alternatively, the control node 41 may use the attribute information of the mobile station 2 that is included in subscriber information managed by the core network 4 (e.g., a subscriber information server).

When the mobile station 2 is the specific mobile station (e.g., the VIP user or the heavy user), the control node 41 generates a notification indicating that the mobile station 2 is the specific mobile station (the notification hereinafter referred to as a specific attribute notification) and sends the notification to the base station 1 (Step S604). The specific attribute information triggers the base station 1 to use the shared frequency. In the example of Fig. 11, in response to reception of the specific attribute notification from the control node 41, the base station 1 sends the WS allocation request to the OAM 5 (Step S402). The base station 1 receives the WS allocation notification (Step S403) and configures the base station 1 in accordance with the WS configuration information, thereby enabling the base station to use.

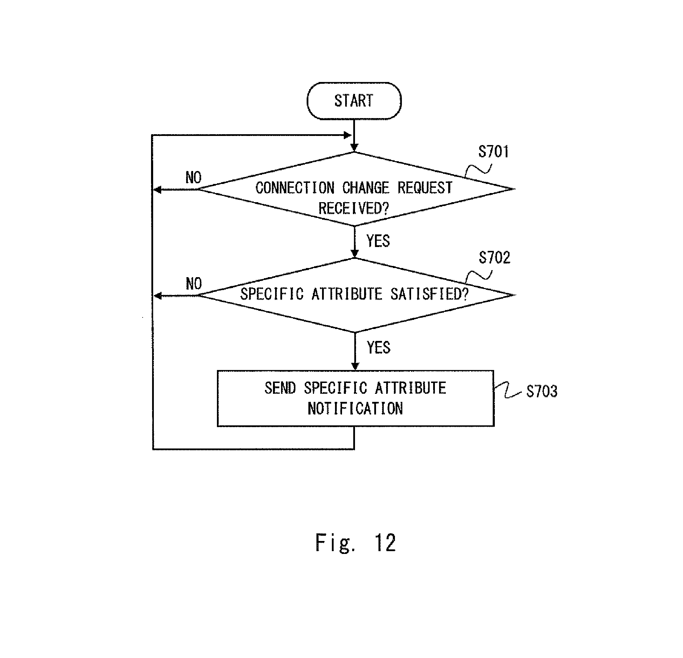

Fig. 12 is a flowchart showing an example of utilization control of the shared frequency performed by the frequency control unit 3 that is arranged in the control node 41. Steps S701 to S703 in Fig. 12 correspond to Steps S602 to S604 in Fig. 11, respectively. That is, in Step S701, the control node 41 evaluates whether the connection change request is received. In response to reception of the connection change request (YES in Step S701), the control node 41 evaluates whether the mobile station 2 is the specific mobile station (Step S702). Then, when the mobile station 2 is the specific mobile station (YES in Step S702), the control node 41 sends the specific attribute notification to the base station 1 (Step S703).

As described above, in this embodiment, the frequency control unit 3 is arranged in the control node 41. The OAM 5 can therefore control the utilization by the base station 1 of the shared frequency according to whether or not the mobile station 2 is the specific mobile station. That is, when the mobile station 2 is the specific mobile station, the control node 41 can notify the base station 1 of this fact. The base station 1 that has received the notification can request the spectrum management entity (e.g., the OAM 5) to allocate the shared frequency. That is, in this embodiment, characterization of the mobile station 2 by the specific attribute triggers the core network 4 to send a message to the base station 1.

### Fifth embodiment

In this embodiment, a modified example of the third embodiment will be described. The configuration example of the network including the radio communication system 100 according to this embodiment is similar to that shown in Fig. 5. This embodiment shows an example in which the frequency control unit 3 is arranged in the base station 1, in a manner similar to the third embodiment. However, in this embodiment, the base station 1 evaluates whether the mobile station 2 is the specific mobile station by using the attribute information of the mobile station 2 received from the core network 4.

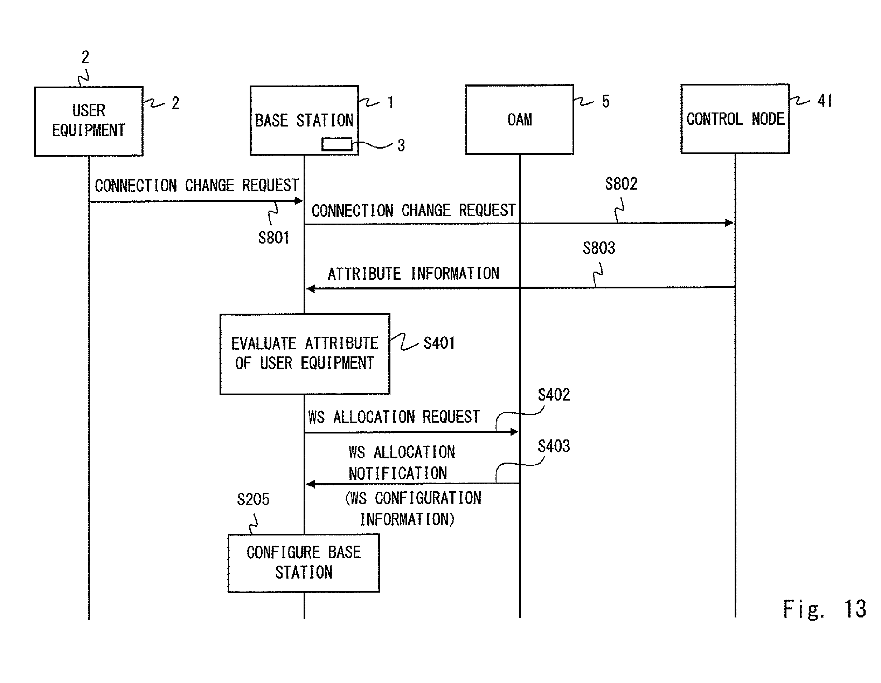

Fig. 13 is a sequence diagram showing an example of a control procedure for starting utilization by the base station 1 of the shared frequency (i.e., a procedure for allocating the shared frequency resources to the base station 1). Processing in Steps S401 to S403 and S205 in Fig. 13 may be similar to the processing in the steps denoted by the same reference numerals as those in Fig. 9.

Further, Steps S801 and S802 in Fig. 13 are similar to Steps S601 and S602 in Fig. 11. That is, in Step S801, the mobile station 2 sends the connection change request. The connection change request may not include the attribute information (e.g., the priority or the traffic volume) that is used for the evaluation of whether the mobile station 2 is the specific mobile station. In Step S802, the base station 1 transfers the connection change request to the control node 41 arranged in the core network 4.

In Step S803, the control node 41 retrieves the attribute information of the mobile station 2, which is a sender of the connection change request, and sends the attribute information of the mobile station 2 to the base station 1. The control node 41 may send to the base station 1 the attribute information of the mobile station 2 included in the connection change request. Alternatively, the control node 41 may retrieve the attribute information of the mobile station 2 included in the subscriber information managed by the core network 4 (e.g., the subscriber information server) and send to the base station 1 the attribute information of the mobile station 2.

The attribute information of the mobile station 2 sent from the control node 41 to the base station 1 is used in the evaluation in Step S401. That is, the base station 1 evaluates, using the attribute information of the mobile station 2 received from the control node 41, whether the mobile station 2 belonging to (or attempting to belong to) its own cell 11 is the specific mobile station.

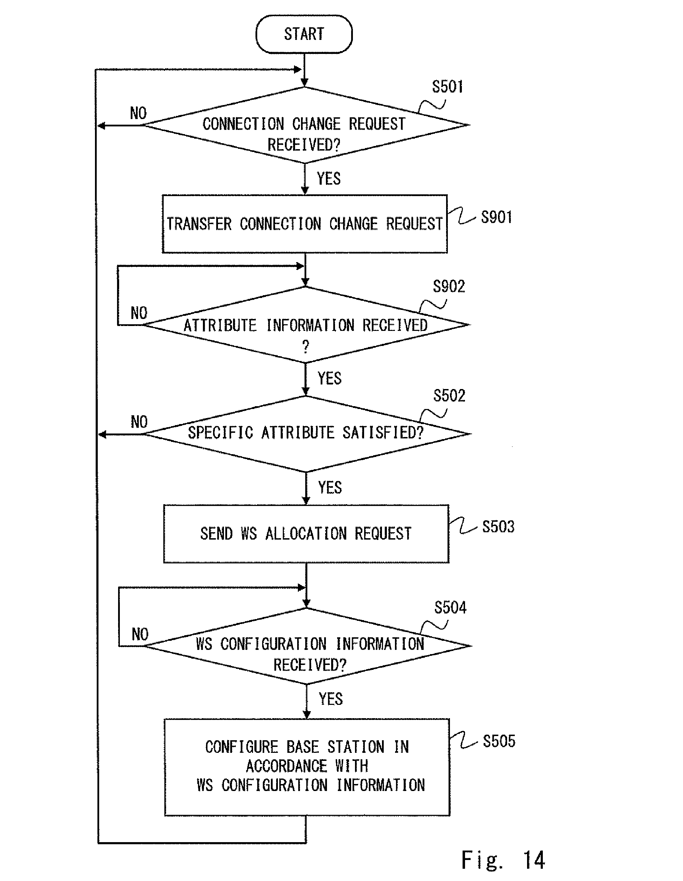

Fig. 14 is a flowchart showing an example of utilization control of the shared frequency performed by the frequency control unit 3 arranged in the base station 1. As is obvious from the comparison between Figs. 14 and 10, Fig. 14 further includes Steps S901 and S902 in addition to Steps S501 to S505 shown in Fig. 10. Steps S901 and S902 correspond to Steps S802 and S803 shown in Fig. 13. That is, the base station 1 transfers to the control node 41 the connection change request received from the mobile station 2 (Step S901), and receives the attribute information of the mobile station 2 that is returned from the control node 41 in response (Step S902).

As described above, in this embodiment, the frequency control unit 3 is arranged in the base station 1. The base station 1 can therefore control the utilization of the shared frequency by the base station 1 according to whether or not the mobile station 2 is the specific mobile station. For example, the base station 1 can request the spectrum management entity (e.g., the OAM 5) to allocate the shared frequency under a condition that the mobile station 2 is the specific mobile station.

Note that, depending on the network architecture, the connection change request from the mobile station 2 is a message that is not terminated at the base station 1 but is transferred to the core network 4. Such a message is referred to as, for example, a Non-Access Stratum (NAS) message. In this case, the base station 1 cannot know the attribute of the mobile station 2 belonging to (or attempting to belong to) its own cell 11. Accordingly, in this embodiment, the attribute information of the mobile station 2 belonging to (or attempting to belong to) the base station 1 is sent from the core network 4 to the base station 1.

### Sixth embodiment

In this embodiment, an example of stopping the base station 1 from using the shared frequency will be described. The configuration examples of the network including the radio communication system 100 according to this embodiment are similar to those shown in Figs. 4 to 6. That is, the frequency control unit 3 may be arranged in the spectrum management entity (e.g., the OAM), the base station 1, or the core network 4 (e.g., the control node 41).

The frequency control unit 3 according to this embodiment operates to stop the utilization by the radio station 1 of the shared frequency when the specific mobile station no longer exists in the cell 11. In order to do so, the frequency control unit 3 may detect that the specific mobile station no longer exists in the cell 11. Specifically, the frequency control unit 3 may detect a detach of the specific mobile station or transition of the specific mobile station to the idle state. Alternatively, the frequency control unit 3 may detect release of the connection between the specific mobile station and the core network 4 or release of the radio resources (e.g., a radio bearer) allocated to the specific mobile station.

In a common radio communication system, when the mobile station 2 ends its communication or does not perform a communication for a predetermined time or longer, the mobile station 2 detaches itself from the cell 11. The detach of the mobile station 2 involves the release of the connection between the mobile station 2 and the core network 4. At this time, the radio resources allocated to the mobile station 2 by the base station 1 are also released. Further, in general, the mobile station 2 transitions to the idle state while being attached to the core network 4. A location of the mobile station 2 in the idle state is managed by the core network 4 by the unit of a paging area. When the mobile station 2 transitions to the idle state, the connection between the mobile station 2 and the core network 4 is released, and the radio resources allocated to the mobile station 2 are also released. The release of the connection or radio resources involved in the detach or idle-state transition of the mobile station 2 may be initiated by the mobile station 2 (e.g., the detach request from the mobile station 2) or may be initiated by the core network 4 (e.g., the detach request or a connection release request from the control node 41).

Moreover, the mobile station 2 may no longer exist in the cell 11 due to a movement of the mobile station 2 (e.g., handover). Further, the mobile station 2 may no longer exist in the cell 11 due to power off of the mobile station 2. If the mobile station 2 does not exist in the cell 11, the connection between the mobile station 2 and the core network 4 is released, and the radio resource allocated to the mobile station 2 is also released.

The frequency control unit 3 according to this embodiment may detect the release of the connection between the mobile station 2 and the core network 4 or the release of the radio resources allocated to the mobile station 2 that occurs due to some kind of cause, as described above.

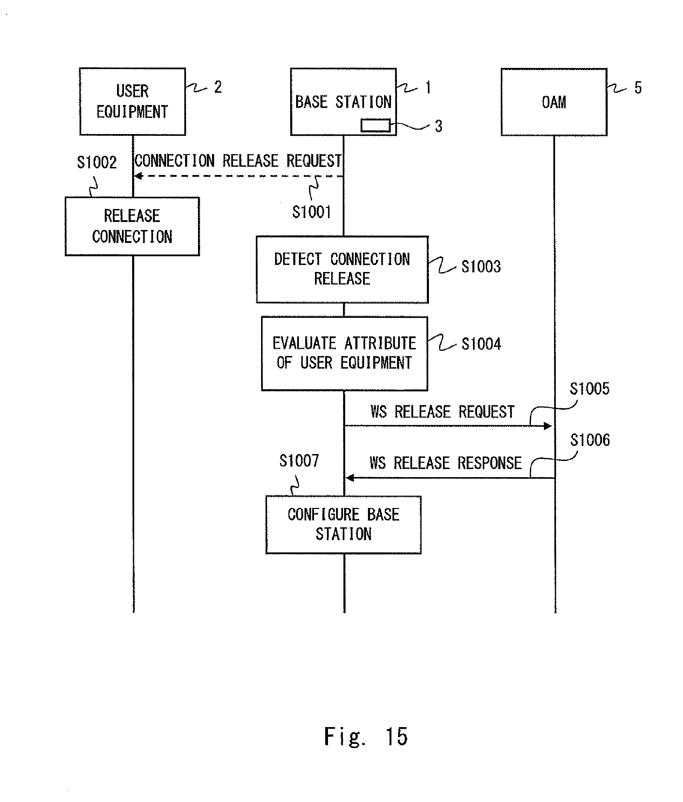

Fig. 15 is a sequence diagram showing an example of a control procedure for stopping utilization of the shared frequency in the radio communication system 100 according to this embodiment. Fig. 15 illustrates a case in which the frequency control unit 3 is arranged in the base station 1 in a manner similar to the third embodiment (Fig. 9) or the fifth embodiment (Fig. 13).

In Step S1002, the mobile station 2 releases the connections with the core network 4 and the base station 1. For example, in response to the connection release request from the base station 1, the mobile station 2 releases the connections with the core network 4 and the base station 1. Further, the mobile station 2 may autonomously release the connection in response to power off of the mobile station 2 or the like.

In Step S1003, the base station 1 detects the connection release regarding the mobile station 2. In Step S1004, the base station 1 evaluates whether the mobile station 2 corresponding to the detected connection release is the specific mobile station. When the mobile station 2 is the specific mobile station (e.g., the VIP user or the heavy user), the base station 1 sends a White Space (WS) release request to the OAM 5 (Step S1005). In Step S1005, the OAM 5 generates a response to the WS release request and sends the response to the base station 1. In Step S1007, the base station 1 configures the base station 1 to stop using the shared frequency.

Note that Steps S1005 and S1006 in Fig. 15 may be omitted. In this case, the base station 1 autonomously configures itself to stop using the shared frequency (Step S1007), and then the base station 1 may notify the OAM 5 of the release of the shared frequency.

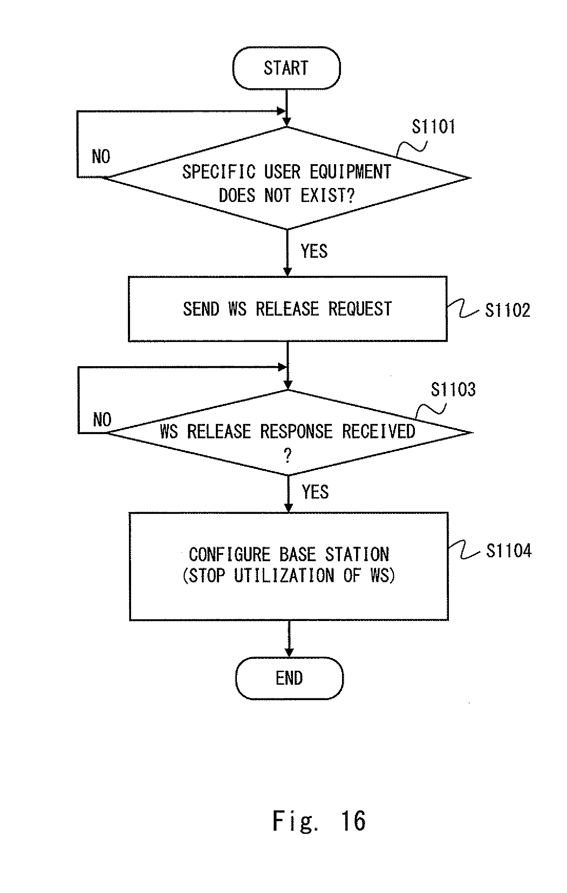

Fig. 16 is a flowchart showing an example of control for stopping utilization of the shared frequency performed by the frequency control unit 3 arranged in the base station 1. In Step S1101, the base station 1 evaluates whether the specific mobile station does not exist in the cell 11. That is, Step S1101 corresponds to S1003 and 1004 in Fig. 15.

When the specific mobile station does not exist in the cell 11 (YES in Step S1101), the base station 1 sends the WS release request (Step S1102). Step S1102 corresponds to Step S1005 in Fig. 15.

In Step S1103, the base station 1 evaluates whether the WS release response has been received. In response to reception of the WS release request (YES in Step S1103), the base station 1 configures the base station 1 to stop using the shared frequency (Step S1104). Steps S1103 and S1104 correspond to Steps S1006 and S1007 in Fig. 15, respectively.

Note that, as already described, the frequency control unit 3 may be arranged in the control node 41 within the core network 4. In this case, the control node 41 may send to the base station 1 a message for triggering the stop of the utilization of the shared frequency in response to completion of the connection release or detach of the specific mobile station. The notification indicating a completion of the connection release or detach of the specific mobile station may be sent from the base station 1 or from the mobile station.

This embodiment can stop the base station 1 that operates the cell 11 from using the shared frequency under a condition that the specific mobile station (e.g., the VIP user and the heavy user) does not exist in the cell 11.

### Other embodiments

The first to sixth embodiments may be combined as appropriate.

The processing performed by the frequency control unit 3 and the transmission control unit 20 described in the first to sixth embodiments may be implemented by using a semiconductor processing device including an Application Specific Integrated Circuit (ASIC). Further, the processing may be implemented by causing a computer system including at least one processor (e.g., a microprocessor, an MPU, and a Digital Signal Processor (DSP)) to execute a program. Specifically, one or more programs including instructions for causing a computer system to execute the algorithms regarding the frequency control unit 3 or the transmission control unit 20 described in the first to sixth embodiments may be created and provided to the computer.

The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

Further, the above-described embodiments are merely examples regarding application of the technical ideas obtained by the present inventor. Needless to say, these technical ideas are not limited to those described in the above embodiments, but may be changed in various ways.

The present application claims priority rights of and is based on Japanese Patent Application No. 2012-102333 filed on April 27, 2012 in the Japanese Patent Office, the entire contents of which are hereby incorporated by reference.

### Reference Signs List

- 1: BASE STATION
- 2: MOBILE STATION
- 3: FREQUENCY CONTROL UNIT
- 4: CORE NETWORK
- 5: SPECTRUM MANAGEMENT ENTITY (e.g., Operation Administration and Maintenance (OAM) system and Spectrum Manager (SM))
- 11: CELL
- 20: TRANSMISSION CONTROL UNIT
- 41: CONTROL NODE
- 42: TRANSFER NODE
- 6: GEO-LOCATION DATABASE (GDB)
- 200: RADIO SYSTEM (e.g., TV BROADCASTING SYSTEM)

## Claims

1. A control apparatus comprising:
a control unit that operates to control, based on at least one condition, utilization of a shared frequency by a base station included in a radio communication system, wherein
the shared frequency is shared by a plurality of radio systems including the radio communication system and is additionally used by the base station that also uses a licensed frequency licensed to the radio communication system, and
the at least one condition includes that at least one mobile station communicating with the base station is **characterized by** a specific attribute.

2. The control apparatus according to Claim 1, wherein the control performed by the control unit includes enabling the base station to use the shared frequency when the at least one mobile station includes a first mobile station **characterized by** the specific attribute.

3. The control apparatus according to Claim 2, wherein
said enabling the base station to use the shared frequency includes at least one of:
(a) allowing the base station to use the shared frequency;
(b) allocating the shared frequency to the base station;
(c) sending to a management entity an allocation request for allocation of the shared frequency; and
(d) sending to the base station a message for triggering the base station to send an allocation request for allocation of the shared frequency.

4. The control apparatus according to Claim 2 or 3, wherein the control unit operates to send to a management entity an allocation request for allocation of the shared frequency in response to connecting the first mobile station to a cell operated by the base station.

5. The control apparatus according to Claim 4, wherein the control unit operates to receive configuration information of the shared frequency that is sent from the management entity in response to the allocation request.

6. The control apparatus according to Claim 5, wherein the configuration information indicates at least one candidate frequency included in the shared frequency.

7. The control apparatus according to Claim 5 or 6, wherein the configuration information includes configuration information of transmission power of the base station on the shared frequency.

8. The control apparatus according to Claim 7, wherein the configuration information of the transmission power indicates maximum allowable transmission power on the shared frequency.

9. The control apparatus according to Claim 2 or 3, wherein the control unit operates to allocate the shared frequency to the base station in response to connecting the first mobile station to the cell operated by the base station.

10. The control apparatus according to Claim 9, wherein the control unit operates to send configuration information of the shared frequency to the base station in order to allocate the shared frequency.

11. The control apparatus according to Claim 10, wherein the configuration information includes configuration information of the transmission power of the base station on the shared frequency.

12. The control apparatus according to Claim 11, wherein the control unit operates to determine the transmission power of the base station so that interference to other radio system from a plurality of base stations including the base station included in the radio communication system will be a predetermined level or less.

13. The control apparatus according to any one of Claims 1 to 3, wherein the control performed by the control unit includes stopping the base station from using the shared frequency when the at least one mobile station does not include a first mobile station **characterized by** the specific attribute.

14. The control apparatus according to Claim 13, wherein the control unit operates to stop the base station from using the shared frequency in response to a release of a connection between the base station and the first mobile station or to a release of a radio resource allocated to the first mobile station.

15. The control apparatus according to Claim 13 or 14, wherein the control unit operates to send to a management entity a release request for release of the shared frequency in order to stop the utilization of the shared frequency.

16. The control apparatus according to Claim 13 or 14, wherein the control unit operates to send to the base station a release request for release of the shared frequency in order to stop the utilization of the shared frequency.

17. The control apparatus according to any one of Claims 1 to 16, wherein the specific attribute includes that a priority of the at least one mobile station is greater than a predetermined level.

18. The control apparatus according to any one of Claims 1 to 17, wherein the specific attribute includes that traffic volume of the at least one mobile station is greater than a predetermined level.

19. The control apparatus according to any one of Claims 1 to 18, wherein the control unit operates to detect a mobile station having the specific attribute based on attribute information of the at least one mobile station received therefrom.

20. The control apparatus according to any one of Claims 1 to 19, wherein the control unit operates to detect a mobile station having the specific attribute based on attribute information of the at least one mobile station received from a core network.

21. The control apparatus according to any one of Claims 1 to 20, wherein the shared frequency is preferentially available to a primary system and is secondarily used by the radio communication system.

22. The control apparatus according to any one of Claims 1 to 21, wherein the shared frequency is TV white space.

23. The control apparatus according to any one of Claims 2 to 8, 13 to 15, and 17 to 22, wherein the control unit is arranged in the base station.

24. The control apparatus according to any one of Claims 2, 9 to 14, and 16 to 23, wherein the control unit is arranged in a management entity that manages a frequency utilization by the radio communication system.

25. A base station used in a radio communication system, the base station comprising:
a control unit that operates to control, based on at least one condition, utilization by the base station of a shared frequency, wherein
the shared frequency is shared by a plurality of radio systems including the radio communication system and is additionally used by the base station that also uses a licensed frequency licensed to the radio communication system, and
the at least one condition includes that the at least one mobile station communicating with the base station is **characterized by** a specific attribute.

26. The base station according to Claim 25, wherein the control performed by the control unit includes sending to a management entity an allocation request for allocation of the shared frequency when the at least one mobile station includes a first mobile station **characterized by** the specific attribute.

27. The base station according to Claim 26, wherein the control unit operates to send the allocation request in response to connecting the first mobile station to a cell operated by the base station.

28. The base station according to Claim 27, wherein the control unit operates to receive configuration information of the shared frequency that is sent from the management entity in response to the allocation request.

29. The base station according to Claim 28, wherein the configuration information indicates at least one candidate frequency included in the shared frequency.

30. The base station according to any one of Claims 25 to 29, wherein the control performed by the control unit includes stopping the base station from using the shared frequency when the at least one mobile station does not include a first mobile station **characterized by** the specific attribute.

31. The base station according to Claim 30, wherein the control unit operates to stop the base station from using the shared frequency in response to a release of a connection between the base station and the first mobile station or to a release of a radio resource allocated to the first mobile station.

32. The base station according to Claim 30 or 31, wherein the control unit operates to send to a management entity a release request for release of the shared frequency in order to stop the utilization of the shared frequency.

33. The base station according to any one of Claims 25 to 32, wherein the specific attribute includes that a priority of the at least one mobile station is greater than a predetermined level.

34. The base station according to any one of Claims 25 to 33, wherein the specific attribute includes that traffic volume of the at least one mobile station is greater than a predetermined level.

35. The base station according to Claim 34, wherein the traffic volume is average traffic volume.

36. The base station according to any one of Claims 25 to 35, wherein the control unit operates to detect a mobile station having the specific attribute based on attribute information of the at least one mobile station received therefrom.

37. The base station according to any one of Claims 25 to 35, wherein the control unit operates to detect a mobile station having the specific attribute based on attribute information of the at least one mobile station received from a core network.

38. A mobile station that is used in a radio communication system and communicates with a base station, the mobile station comprising:
a control unit that operates to send attribute information of the mobile station to the base station or a core network node, wherein
the attribute information is used to control, based on at least one condition, utilization by the base station of a shared frequency,
the shared frequency is shared by a plurality of radio systems including the radio communication system and is additionally used by the base station that also uses a licensed frequency licensed to the radio communication system, and
the at least one condition includes that the mobile station is **characterized by** a specific attribute.

39. The mobile station according to Claim 38, wherein the attribute information includes a priority of the mobile station.

40. The mobile station according to Claim 39, wherein the specific attribute includes that the priority is greater than a predetermined level.

41. The mobile station according to any one of Claims 38 to 40, wherein the attribute information includes traffic volume of the mobile station.

42. The mobile station according to Claim 41, wherein the specific attribute includes that the traffic volume is greater than a predetermined level.

43. The mobile station according to Claim 41 or 42, wherein the traffic volume is average traffic volume.

44. A core network node arranged in a core network of a radio communication system, the core network node comprising:
a control unit that operates to send, to a base station included in the radio communication system, a first notification indicating that a mobile station belonging to the base station is **characterized by** a specific attribute, wherein
the first notification triggers the base station to use a shared frequency, and
the shared frequency is shared by a plurality of radio systems including the radio communication system and is additionally used by the base station that also uses a licensed frequency licensed to the radio communication system.

45. The core network node according to Claim 44, wherein the control unit operates to evaluate whether the mobile station is **characterized by** the specific attribute in response to reception of a request for a change in a connection state of the mobile station from the mobile station or the base station.

46. The core network node according to 44 or 45, wherein the specific attribute includes that a priority of the mobile station is greater than a predetermined level.

47. The core network node according to any one of Claims 44 to 46, wherein the specific attribute includes that traffic volume of the mobile station is greater than a predetermined level.

48. A method for controlling utilization of a shared frequency comprising:
controlling, based on at least one condition, utilization by a base station included in a radio communication system of a shared frequency, wherein
the shared frequency is shared by a plurality of radio systems including the radio communication system and is additionally used by the base station that also uses a licensed frequency licensed to the radio communication system, and
the at least one condition includes that a mobile station communicating with the base station is **characterized by** a specific attribute.

49. The method according to Claim 48, wherein the controlling includes sending to a management entity an allocation request for allocation of the shared frequency when the at least one mobile station includes first mobile station **characterized by** the specific attribute.

50. A method implemented in a mobile station that is used in a radio communication system and communicates with a base station, the method comprising:
sending attribute information of the mobile station to the base station or a core network node, wherein
the attribute information is used to control, based on at least one condition, utilization by the base station of a shared frequency,
the shared frequency is shared by a plurality of radio systems including the radio communication system and is additionally used by the base station that also uses a licensed frequency licensed to the radio communication system, and
the at least one condition includes that the mobile station is **characterized by** a specific attribute.

51. A method implemented in a core network node arranged in a core network of a radio communication system, the method comprising:
sending a first notification to a base station included in the radio communication system, under a condition that a mobile station belonging to the base station is **characterized by** a specific attribute, wherein
the first notification triggers the base station to use a shared frequency, and
the shared frequency is shared by a plurality of radio systems including the radio communication system and is additionally used by the base station that also uses a licensed frequency licensed to the radio communication system.

52. A non-transitory computer readable medium storing a program to cause a computer to perform a method, the method comprising:
controlling, based on at least one condition, utilization of a shared frequency by a base station included in a radio communication system, wherein
the shared frequency is shared by a plurality of radio systems including the radio communication system and is additionally used by the base station that also uses a licensed frequency licensed to the radio communication system, and
the at least one condition includes that at least one mobile station communicating with the base station is **characterized by** a specific attribute.

53. A non-transitory computer readable medium storing a program for causing a computer to perform a method implemented in a mobile station that is used in a radio communication system and communicates with a base station, the method comprising:
controlling the mobile station to send attribute information of the mobile station to the base station or a core network node, wherein
the attribute information is used to control, based on at least one condition, utilization by the base station based of a shared frequency,
the shared frequency is shared by a plurality of radio systems including the radio communication system and is additionally used by the base station that also uses a licensed frequency licensed to the radio communication system, and
the at least one condition includes that the mobile station is **characterized by** a specific attribute.

54. A non-transitory computer readable medium storing a program for causing a computer to perform a method implemented in a core network node arranged in a core network of a radio communication system, the method comprising:
controlling the core network node to send a first notification to a base station included in the radio communication system, under a condition that a mobile station belonging to the base station is **characterized by** a specific attribute, wherein
the first notification triggers the base station to use a shared frequency, and
the shared frequency is shared by a plurality of radio systems including the radio communication system and is additionally used by the base station that also uses a licensed frequency licensed to the radio communication system.
